## Europäisches Patentamt
## European Patent Office
## Office européen des brevets

(11) Veröffentlichungsnummer: **0 032 107**
**B1**

(12) **EUROPÄISCHE PATENTSCHRIFT**

(45) Veröffentlichungstag der Patentschrift:
**22.05.85**

(51) Int. Cl.⁴: **H 04 L 9/00**

(21) Anmeldenummer: **80810391.5**

(22) Anmeldetag: **15.12.80**

(54) **Chiffrier/Dechiffriersystem.**

(30) Priorität: **20.12.79 CH 11319/79**

(43) Veröffentlichungstag der Anmeldung:
**15.07.81 Patentblatt 81/28**

(45) Bekanntmachung des Hinweises auf die Patenterteilung:
**22.05.85 Patentblatt 85/21**

(84) Benannte Vertragsstaaten:
**CH DE FR GB LI NL SE**

(56) Entgegenhaltungen:
**DE - A - 2 334 330**
**FR - A - 2 210 307**
**FR - A - 2 288 428**
**US - A - 3 291 908**

**ELECTRONICS, Band 52, Heft 13, 21. Juni 1979, NEW YORK (US), HINDIN: "LSI-bsed data encryption discourages the data thief", Seiten 107-120**

(73) Patentinhaber: **GRETAG Aktiengesellschaft, Althardstrasse 70, CH-8105 Regensdorf (CH)**

(72) Erfinder: **Mueller, Kurt Hugo, Dr., Höhenstrasse 15 A, CH-8304 Wallisellen (CH)**

(74) Vertreter: **Pirner, Wilhelm et al, Patentabteilung der CIBA-GEIGY AG Postfach, CH-4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Chiffrier/Dechiffriersystem gemäss Oberbegriff des Patentanspruchs 1.

Typische Vertreter solcher Chiffrier/Dechiffriersysteme sind beispielsweise die Systeme GC-201, GC-505 und GC-515 der Firma Gretag AG, Regensdorf, Schweiz. Diese Systeme enthalten als Kernstück einen Chiffrier/Dechiffriergenerator, dessen Struktur und Anfangszustände u.a. durch einen geheimen Grundschlüssel und einen nicht geheimen, zufälligen Zusatzschlüssel bestimmt sind. Bei jeder Neuinitialisierung des Systems (erste Übertragungsaufnahme, Wiederaufnahme nach Störung, etc.) wird automatisch ein neuer zufälliger Zusatzschlüssel erzeugt, klar übertragen und sende- und empfangsseitig in die Chiffrier/Dechiffriergeneratoren geladen. Der geheime Grundschlüssel hingegen wird in der Regel nur in relativ grossen Zeitabständen gewechselt (vgl. z.B. auch US-A-3 291 908, DE-A1-2 334 330).

Bei älteren Systemen erfolgt der Grundschlüsselwechsel durch direkte Eingabe des neuen Schlüssels in den Generator über eine Tastatur oder dgl. Die oben genannten Geräte GC-505 und GC-515 verfügen sende- und empfangsseitig über je einen Speicher, in dem eine Anzahl (z.B. 30) sende- und empfangsseitig identischer geheimer Grundschlüssel vorrätig gehalten wird. Zum Wechseln des Grundschlüssels braucht beim GC-515 nur noch an jeder Station via Wählschalter oder dgl. die Speicheradresse oder Nummer des gewünschten Schlüssels eingegeben zu werden, die Ladung des Schlüssels in den Chiffriergenerator erfolgt dann automatisch. Schlüsseländerungen (z.B. auf die nächsthöhere Schlüsselnummer) werden in bestimmten, zwischen den Partnerstationen vereinbarten Zeitabschnitten vorgenommen. Beim GC-505 genügt es, die Schlüsseladresse in der aufrufenden Station zu wählen, worauf sie automatisch zur Partnerstation übertragen wird.

Bei der chiffrierten Übertragung muss die für eine eine bestimmte feste Schlüsseleinstellung übertragene Datenmenge (Anzahl Bit) aus Sicherheitsgründen bekanntlich beschränkt werden. Eine obere Grenze ist durch die strukturbedingte Rekursionslänge der zur Verwendung gelangen den Chiffriergeneratoren gegeben. Die maximale Rekursionszeit, während welcher mit unveränderter Schlüsseleinstellung gearbeitet werden darf, hängt von dieser Rekursionslänge ab und ist natürlich umgekehrt proportional der Übertragungsrate. So wird beispielsweise für das genannte Gerät GC-515 bei einer Übertragungsrate von 19,2 kb/S eine wöchentliche Änderung des Grundschlüssels empfohlen. Da der Schlüsselspeicher des GC-515 total 30 Schlüssel enthält, müsste der Speicher bei Dauerbetrieb also alle sechs bis sieben Monate ersetzt werden. Diese relativ häufige Änderung des Grundschlüssels und der häufige Ersatz der Schlüsselspeicher bedingen einen unerwünschten administrativen und personellen Aufwand, der, dem Trend zu höheren Übertragungsraten folgend, in Zukunft noch grösser werden dürfte.

Der Erfindung liegt daher die Aufgabe zugrunde, ein Chiffrier/Dechiffriersystem der eingangs definierten Art so zu verbessern, dass seine mit Wahl und Wechsel von Chiffrierschlüsseln zusammenhängende Bedienung möglichst vereinfacht wird bzw. vollständig entfällt.

Diese Aufgabe wird erfindungsgemäss durch die im Patentanspruch 1 angeführten Merkmale und Massnahmen gelöst.

Beim erfindungsgemässen System wird der Grundschlüssel statt durch bewusstes, manuelles Wählen (wie z.B. beim genannten Gerät GC-515) einer Schlüsseladresse oder -nummer durch eine von einem Zufallsgenerator, der vorzugsweise gleich der für die Erzeugung des Zusatzschlüssels ohnehin vorhandene ist, erzeugte Zufallsadresse ausgewählt. Dabei sind alle Schlüsseladressen gleich wahrscheinlich, so dass über eine längere Zeit eine statistisch relativ gut ausgeglichene Betriebszeit jedes einzelnen Grundschlüssels gewährleistet ist. Durch den häufigen, statistischen Wechsel des Grundschlüssels werden, vor allem bei beschränktem oder sporadischem Betrieb des Systems, die Freiheitsgrade des Schlüsselspeichers kryptologisch besser ausgenutzt. Der automatische Schlüsselwechsel vereinfacht das Schlüsselmanagement und lässt das Chiffriergerät zu einer praktisch unbedienten Black Box werden. Durch den Wegfall der manuellen Schlüsselwahl und der dafür nötigen Bedienungselemente wird das Chiffriergerät schliesslich auch billiger.

Im folgenden wird die Erfindung anhand der Zeichnung näher erläutert. Es zeigen:

Fig. 1 ein Blockschaltbild eines ersten Ausführungsbeispiels,

Fig. 2–4 je eine Skizze zur Erläuterung von dessen Funktionsweise,

Fig. 5 und 6 Blockschaltschemata von zwei weiteren Ausführungsbeispielen und

Fig. 7 eine weitere Skizze zur Funktionserläuterung.

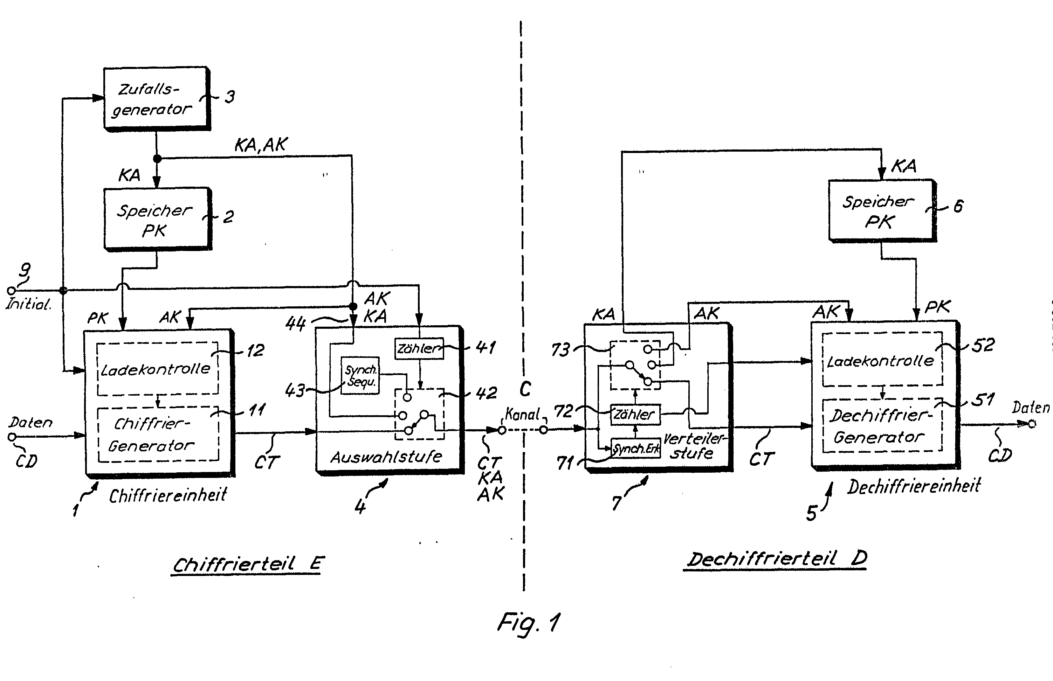

Das in Fig. 1 dargestellte Chiffrier/Dechiffriersystem besteht aus einem insgesamt mit E bezeichneten Chiffrierteil und einem insgesamt mit D bezeichneten Dechiffrierteil, die über eine allgemein als Kanal C bezeichnete Datenverbindung in gegenseitiger Verbindung stehen.

Der Chiffrierteil E umfasst im wesentlichen eine u.a. einen Chiffriergenerator 11 und eine Ladekontrolle 12 enthaltende Chiffriereinheit 1, einen Grundschlüsselspeicher 2, einen Zufallsgenerator 3 und eine Auswahlstufe 4. In ähnlicher Weise umfasst der Dechiffrierteil D eine Dechiffriereinheit 5 mit einem Dechiffriergenerator 51 und einer Ladekontrolle 52, einen Grundschlüsselspeicher 6 und eine Verteilerstufe 7.

Die Auswahlstufe 4 umfasst einen Zähler 41, einen von diesem gesteuerten Schalter 42 und einen Speicher 43 für eine Synchronisiersequenz. Anstelle des Speichers könnte natürlich auch ein entsprechender Generator vorhanden sein, der die Synchronisiersequenz bei Bedarf erzeugt.

Die Verteilerstufe umfasst analog zur Auswahlstufe 4 eine Erkennungsstufe 71 für die Synchronisiersequenz, einen Zähler 72 und einen vom Zähler 72 gesteuerten Schalter 73.

Der Aufbau des in Fig. 1 dargestellten Chiffrier/ Dechiffriersystems entspricht bis auf einige Besonderheiten im wesentlichen dem der schon genannten Chiffriersysteme GC-505 und GC-515 der Firma Gretag AG, Regensdorf, Schweiz. Diese Chiffriersysteme werden seit mehreren Jahren weltweit verkauft, so dass ihre Konzeption und ihre Funktionsweise dem Fachmann geläufig sind. Die vorliegende Beschreibung beschränkt sich daher auf das für das Verständnis der Erfindung Wesentliche, wobei alles, was hier nicht speziell erläutert ist, als funktionell ähnlich wie bei den beiden genannten Chiffriersystemen anzunehmen ist.

Die generelle Funktionsweise des dargestellten Systems ist wie folgt:

Zur Aufnahme einer Verbindung wird zunächst über einen im Chiffrierteil E vorhandenen Eingang 9 ein Initialisierungsbefehl gegeben. Durch diesen Befehl wird ein Initialisierungszyklus veranlasst, bei dem Chiffrier- und Dechiffrierteil mittels der Synchronisiersequenz synchronisiert werden, vom Zufallsgenerator 3 ein Zusatzschlüssel AK erzeugt, übertragen und in Chiffrier- und Dechiffriergenerator eingelesen wird, und ferner vom Zufallsgenerator 3 auch eine zufällige Auswahl-Adresse $KA_i$ für die im Grundschlüsselspeicher 2 gespeicherten Grundschlüssel $PK_i$ erzeugt, die Adresse übertragen und der entsprechende Grundschlüsse $PK_i$ in Chiffrier- und Dechiffriergenerator eingelesen wird.

Dieser Initialisierungszyklus verläuft mit der einzigen, allerdings das Kernstück der Erfindung bildenden Ausnahme, dass die Auswahl des Grundschlüssels nicht von Hand, sondern durch den Zufallsgenerator 3 zufallsmässig gesteuert ist, völlig gleich wie bei den schon genannten bekannten Chiffriersystemen GC-505 und GC-515. Schaltungstechnisch findet dies darin seinen Niederschlag, dass der Eingang 44 der Auswahlstufe 4 und der Adresseingang des Speichers 2 nicht mit einer manuellen Eingabevorrichtung, sondern mit dem Zufallsgenerator 3 verbunden sind.

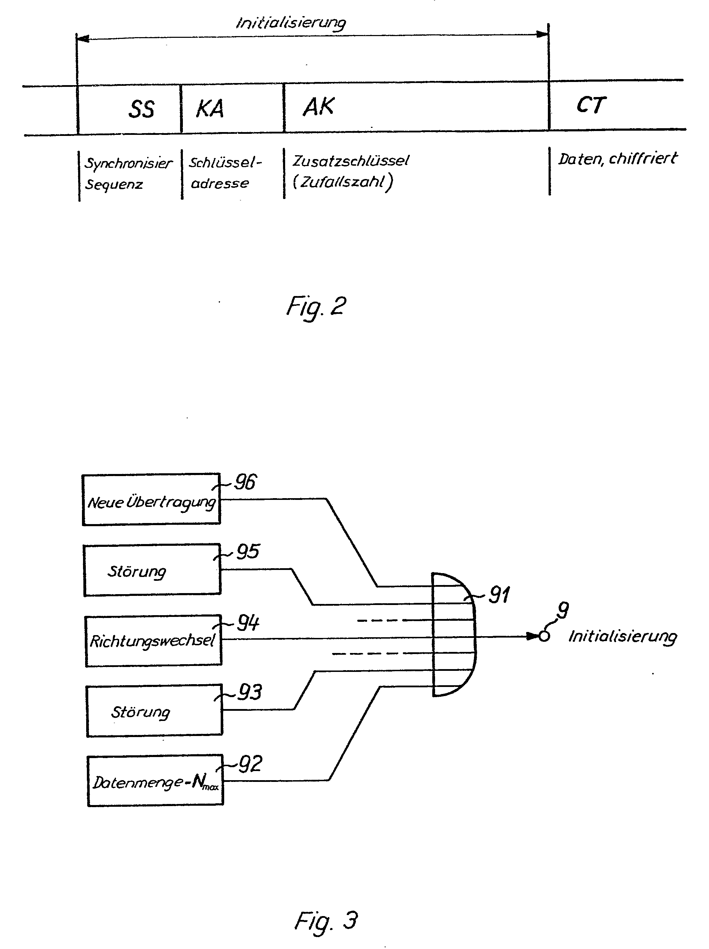

Der Initialisierungszyklus ist in Fig. 2 nochmals veranschaulicht:

Zunächst wird die Synchronisiersequenz SS ausgesandt, dann die Adresse $KA_i$ für den jeweiligen Grundschlüssel $PK_i$ und schliesslich der zufällige Zusatzschlüssel AK. Die beiden letzteren könnten natürlich auch in der Reihenfolge vertauscht sein bzw. könnte die Adresse im Zusatzschlüssel in irgend einer Form enthalten sein. Die Zähler 41 und 72 überwachen (letzterer nach Freigabe durch die Erkennungsstufe 71) die gerade übertragene Information (Synchronisiersequenz, Schlüsseladresse usw.) und veranlassen bei Erreichen der jeweils vorgegebenen Längen (Bitzahlen) dieser Informationen eine Umschaltung der Schalter 42 und 73 in die dem richtigen Datenfluss entsprechenden Schaltstellungen sowie im Dechiffrierteil über die Ladekontrolle 52 auch das Laden der Schlüssel PK und AK in den Dechiffriergenerator 51.

Nach Abschluss des Initialisierungszyklusses sind Chiffrier- und Dechiffriergenerator synchronisiert und mit jeweils dem gleichen Grund- und Zusatzschlüssel $PK_i$ bzw. AK geladen. Die Schalter 42 und 73 befinden sich wieder in ihrer gezeigten Ausgangsstellung. Nunmehr können die Chiffriereinheit 1 Klardaten CD zugeführt und von dieser in bekannter Weise chiffriert werden. Das dabei entstehende Chiffrat CT gelangt dann über die Auswahlstufe 4, den Kanal C und die Verteilerstufe 7 in die Dechiffriereinheit 5 und wird dort wieder in den ursprünglichen Klartext CD zurückverwandelt.

Der zur Verwendung gelangende Grundschlüssel $PK_i$ wird also bei jeder Neuinitialisierung durch den Zufallsgenerator zufallsmässig ausgewählt. Der Zufallsgenerator kann für die Adressinformation einen einzigen Ausgang besitzen, es ist aber auch ohne weiteres denkbar, die Adressinformation direkt aus dem ohnehin vorhandenen, ebenfalls zufälligen Zusatzschlüssel abzuleiten, z.B. etwa über eine Polynom-Verknüpfung.

Die Adresse des z.B. durch die aufrufende Station zufällig ausgewählten Grundschlüssels wird klar zum Empfänger übertragen, wobei vorzugsweise fehlerkorrigierende oder fehlererkennende Codes verwendet werden.

Durch die zufallsmässige Auswahl der Grundschlüssel aus dem gespeicherten Vorrat ist jede Adresse gleich wahrscheinlich. Eine «Buchführung» zur Vermeidung mehrmaligen Aufrufen desselben Schlüssels ist daher nicht unbedingt nötig.

In einem praktischen Beispiel können die Schlüsselspeicher z.B. 256 verschiedene Schlüssel à je 64 bit aufnehmen. Ein derartiger Speicher lässt sich derzeit ohne weiteres in einer einzigen integrierten Schaltung (PROM) realisieren. Bei fünfjährigem Betrieb des Systems würde im Durchschnitt jeder Schlüssel eine Woche lang verwendet. Bei Neuinitialisierungen in Intervallen von durchschnittlich 5–6 Stunden würde dann jeder Schlüssel während der fünfjährigen Betriebszeit im Durchschnitt etwa 32mal benutzt, was für einen relativ guten statistischen Ausgleich der Betriebszeiten der einzelnen Schlüssel sorgen sollte.

Eine Neuinitialisierung des Systems und damit ein Wechsel des Grundschlüssels (und gegebenenfalls auch des Zusatzschlüssels) wird generell bei Netzunterbruch, Leitungsunterbruch, Aktivierung eines Selbsttestes, Verlust des Byte-Takes und Wechsel der Übertragungsrichtung vorgenommen. Ein neuer Grundschlüssel kann ferner auch verwendet werden, wenn eine vorgegebene maximale Datenmenge $N_{max}$ verarbeitet ist. Letztere beträgt zweckmässig nur einen Bruchteil der Rekursionslänge des Chiffriergenerators und ist ferner klein genug, um während der vorgesehenen Betriebszeit des Schlüsselspeichers eine statistisch ausgeglichene Durchmischung aller Schlüssel erwarten zu lassen.

Die zu einer Neuinitialisierung führenden Ereignisse sind in Fig. 3 nochmals schematisch zusammengefasst. Die Kästchen 92 bis 96 symbolisieren Sensoren bzw. Detektoren für die betreffenden Ereignisse, wobei die Kästchen 93 und 95 stellvertretend für alle möglichen Störungen dastehen. Die Ausgänge der Ereignissensoren sind in einem Oder-Tor 91 zusammengefasst, das seinerseits mit dem Initialisierungseingang 9 des Chiffrierteils 1 verbunden ist, so dass also bei Ansprechen irgendeines der Sensoren eine Initialisierung ausgelöst wird.

Es versteht sich, dass die Darstellung nach Fig. 3 rein symbolhaft ist und in Realität selbstverständlich auch anders gelöst sein kann.

Überhaupt ist das ganze Chiffriersystem mit Vorteil in Form eines Mikrocomputersystems realisiert, bei welchem die einzelnen Operationen und Datenflüsse programmgesteuert ablaufen. Aus Geschwindigkeits- oder anderen Gründen können dabei einzelne Komponenten, wie z.B. Teile des Chiffriergenerators usw. , natürlich auch in Hardware implementiert sein. Die vorliegende Beschreibung und die Figuren sollen lediglich die für die Erfindung wesentlichen Funktionsgruppen erklären, wobei es keine Rolle spielt, ob diese Gruppen durch spezifische Hardware oder in einem Mikrocomputersystem softwaremässig implementiert sind. Als Beispiel für ein mit einem Mikrocomputersystem ausgerüstetes Chiffriersystem sei hier nur das schon genannte Gerät GC-505 angeführt.

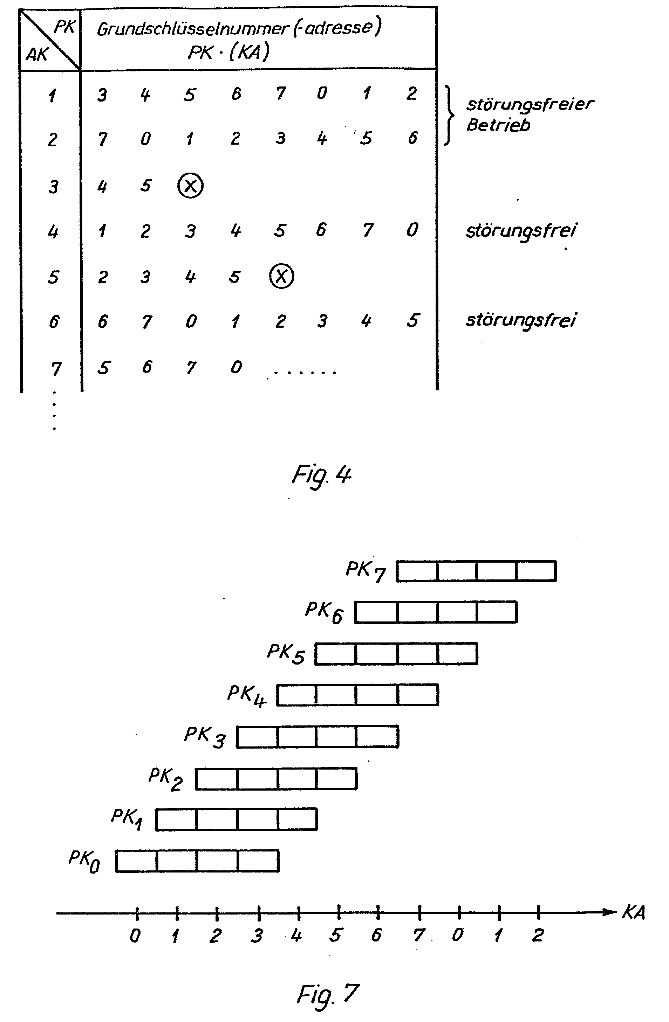

Anstatt den Grundschlüssel PK jeweils nur bei einer Neuinitialisierung zu wechseln, kann der Schlüsselwechsel auch gemäss dem folgenden, in der Fig. 4 an einem Beispiel verdeutlichten Prinzip vorgenommen werden:

Bei Beginn der Übertragung erfolgt eine Neuinitialisierung, wobei ein erster zufälliger Zusatzschlüssel AK 1 und ein erster, zufällig ausgewählter Grundschlüssel erzeugt bzw. aus dem Speicher 2 ausgelesen werden. In Fig. 4 ist angenommen, im Speicher befindet sich ein Vorrat von acht Grundschlüsseln, die von 0 bis 7 durchnumeriert sind. Der erste ausgewählte Grundschlüssel ist hier durch die Nummer 3 markiert. Mit dieser Schlüsseleinstellung AK 1–PK 3 wird nun chiffriert bzw. dechiffriert. Nach Verarbeitung einer vorgegebenen maximalen Datenmenge $N_{max}$, die natürlich von der Rekursionslänge des Chiffriergenerators abhängt, wird bei gleichbleibendem Zusatzschlüssel AK 1 ein neuer Grundschlüssel ausgewählt und eingestellt. Der Einfachheit halber ist dies in der Regel gleich der Schlüssel mit der nächstfolgenden Speicheradresse, im Beispiel hier also der Grundschlüssel Nr. 4. Mit dieser neuen Schlüsselkombination AK 1–PK 4 wird nun wieder – störungsfreier Betrieb vorausgesetzt – solange gearbeitet, bis die maximale Datenmenge $N_{max}$ verarbeitet ist. Daraufhin wird der nächstfolgende Grundschlüssel eingestellt und so weiter, bis alle Schlüssel (hier acht) im Speicher einmal benützt worden sind. Danach erfolgt automatisch eine neue Initialisierung unter Erzeugung eines neuen zufälligen Zusatzschlüssels AK 2 und einer neuen Anfangsadresse – hier z.B. Nr. 7 – für die Grundschlüssel PK.

Nach diesem Schema wird solange fortgefahren, bis irgendein Ereignis eintritt, welches eine Neuinitialisierung erzwingt. In Fig. 4 sind diese Ereignisse durch das Symbol ⊗ bezeichnet. Nach erfolgter Neuinitialisierung wird dann wieder im beschriebenen Rhythmus weiter gearbeitet, was aus Fig. 4 unschwer erkennbar ist.

Das eben beschriebene Verfahren hat den Vorteil, dass nach Ablauf der maximal vorgegebenen Datenmenge $N_{max}$ ein Schlüsselwechsel ohne Unterbruch der Datenübertragung vorgenommen werden kann, da hier durch die einfache Inkrementierung der Speicheradressen die Schlüsseladressen nicht übertragen werden müssen.

Die Länge $N_{max}$ der maximalen Datenmenge muss selbstverständlich nicht unbedingt konstant sein. Beispielsweise könnte der (Grund-)Schlüsselwechsel auch datenpaketorientiert erfolgen. Eine weitere Möglichkeit wäre, den Schlüsselwechsel d.h. die Inkrementierung der Grundschlüsseladressen, in geheimen, eventuell pseudozufällig determinierten Zeitabständen vorzunehmen.

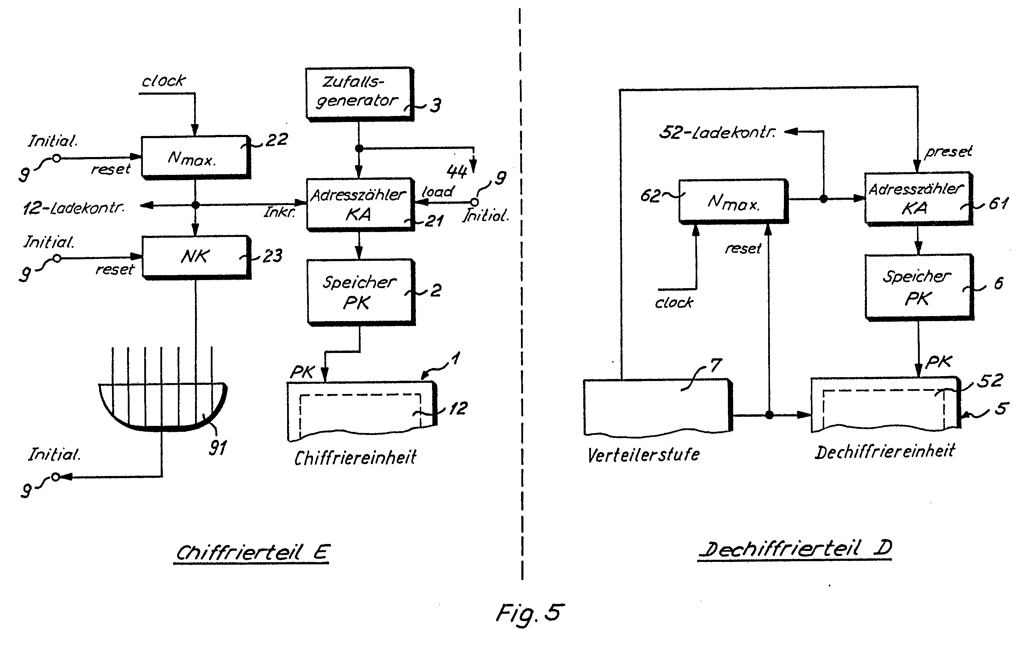

Die zur praktischen Durchführung des eben beschriebenen Schlüsselwechselschemas notwendigen schaltungstechnischen Massnahmen sind aus Fig. 5 zu ersehen, wobei nur die für das Verständnis dieses Schemas nötigen Teile dargestellt sind und der Rest gleich wie in Fig. 1 ist. Ausserdem sind natürlich auch bei diesem Ausführungsbeispiel des erfindungsgemässen Chiffriersystems die einzelnen Funktionsgruppen vorzugsweise durch ein Mikrocomputersystem realisiert.

Zusätzlich zu den schon in Fig. 1 dargestellten Elementen sind in Fig. 5 sendeseitig noch ein Adresszähler 21 für den Speicher 2, ein Zähler 22 für die Erfassung der verarbeiteten Daten sowie ein Schlüsselzähler 23 und empfangsseitig ein Adresszähler 61 und ein Datenzähler 62 vorhanden.

Bei einer Neuinitialisierung werden alle Zähler zurückgesetzt und die erste Zufallsadresse KA für den Grundschlüssel in den Adresszähler 21 geladen und dann die Verarbeitung der Daten begonnen. Sobald der Datenzähler 22 den vorgegebenen $N_{max}$ erreicht, werden der Adresszähler 21 und der Schlüsselzähler 23 inkrementiert und ein neuer Grundschlüssel in den Chiffriergenerator eingelesen. Dasselbe geschieht sinngemäss natürlich auch im Dechiffrierteil. Wenn der Schlüsselzähler 23 den der im Speicher 2 vorhandenen Anzahl Grundschlüssel PK entsprechenden Stand NK erreicht, veranlasst er über das Oder-Tor 91 und den Eingang 9 einen neuen Initialisierungszyklus und so fort.

Das bisher beschriebene Schlüsselwechselprinzip lässt sich im Sinne einer besseren Speicherausnützung noch etwas verallgemeinern. Statt die gegebene Speicherkapazität N × M der Grundschlüsselspeicher in N unabhängige Schlüssel à je M bit zu unterteilen, kann eine wesentlich grössere Schlüsselmenge im Speicher untergebracht werden, wenn jeder Schlüssel aus einer spezifizierten Anordnung von M der total M × N Informationselemente besteht. Im extremsten Fall, wo jedes der M Schlüsselbit pro Schlüssel durch eine Zufallsadresse bestimmt würde, wären $(M \times N)^M$ verschiedene Schlüsselkombinationen möglich, wobei davon natürlich nur $2^M$ gegenseitig unterscheidbar wären. Derart ausgewählte Grundschlüssel würden praktisch idealen Zufallscharakter besitzen, die statistische Ausnützung der Geheimelemente wäre aber nur unzulänglich und die zu übertragende Adressinformation wäre für die Praxis zu lang.

Eine praktisch attraktivere Lösung ist das Abzählen von M Schlüsselbits ab einem zufällig aus der Gesamtheit der $M \times N$ bit ausgewählten Bit. Damit ergeben sich statt N nun $M \times N$ Schlüssel, wobei allerdings zu jedem Schlüssel $PK_i$ weitere Schlüsselpaare $PK_{i-\mu}$ und $PK_{i+\mu}$ existieren, welche $PK_i$ um $M-(-)\mu$ bit überlappen ($1 \leq \mu \leq M-1$). Nicht alle $M \times N$ Schlüssel sind unbedingt verschieden, aber sie sind es mit sehr hoher Wahrscheinlichkeit, selbst wenn der Speicherinhalt keinen speziellen Einschränkungen unterworfen ist.

In Fig. 7 ist die eben skizzierte Schlüsselorganisation im Speicher 2 bzw. 6 für $N = 2$ und $M = 4$ bildhaft dargestellt. Wie man erkennt, sind acht verschiedene Schlüssel mit den Anfangsadressen 0 bis 7 möglich, wobei sich benachbarte Schlüssel jeweils um 3 bit gegenseitig überlappen.

Die gegenseitige Überlappung der Grundschlüssel PK kann, sofern überhaupt erwünscht, klein gehalten werden. Sie kann zum Beispiel dadurch erreicht werden, dass man kürzere Startadressen wählt, welche Gruppen von Bits anstelle von Einzelbits definieren. Als Beispiel kann man sich die in Fig. 7 gezeigte Anordnung als Bytes anstellte von Bits vorstellen. Eine Byte-Adressierung als kleinste Einheit ist auch bei den meisten Mikrocomputersystemen software- und hardwaremässig besonders günstig.

Mit einem Festwertspeicher (PROM) von $2048 \times 8$ bit Speicherkapazität ergeben sich bei einer Schlüssellänge von $M = 64$ bit beispielsweise folgende Möglichkeiten:

| Überlappung (bit) | Anzahl Schlüssel | Adressumfang (bit) |
|---|---|---|
| 0 | 256 | 8 |
| 32 | 512 | 9 |
| 48 | 1024 | 10 |
| 56 | 2048 | 11 |

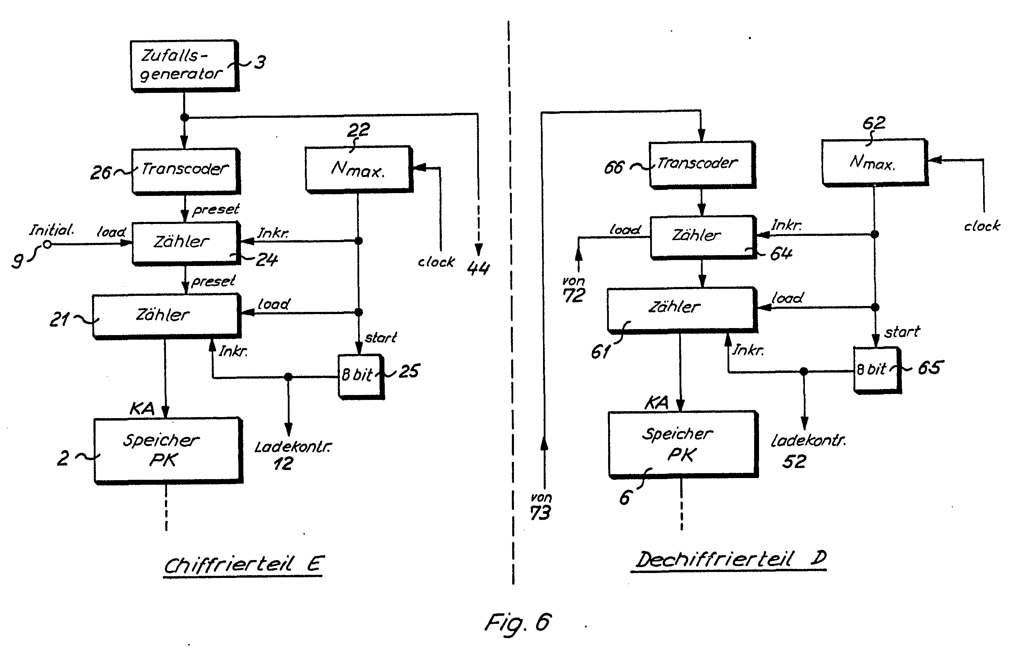

In Fig. 6 ist ein Ausführungsbeispiel eines Chiffriersystems dargestellt, welches für die eben beschriebene Schlüsselorganisation mit überlappenden Schlüsseln eingerichtet ist. Es unterscheidet sich gegenüber der Ausführungsform nach Fig. 5 lediglich durch je einen weiteren Adresszähler 24 bzw. 64 und einen Impulsgenerator 25 bzw. 65. Ferner ist noch je ein Transcoder 26 bzw. 66 vorgesehen, die allerdings mit der Schlüsselorganisation an sich nichts zu tun haben und im folgenden zunächst als nicht existent betrachtet werden.

Die Grundschlüsselspeicher 2 und 6 sind hier beispielsweise vom Format $2048 \times 8$ bit, benötigen also zur Adressierung jeweils eines Bytes eine 11-bit-Adresse. Jeder Grundschlüssel möge 64 bit umfassen.

Bei einer Initialisierung wird nun zunächst eine vom Zufallsgenerator 3 gebildete 8-bit-Adresse in die zweiten Adresszähler 24 bzw. 64 eingelesen. Gleichzeitig werden die acht höherwertigen Bits der ersten, je elf Bit umfassenden Adresszähler 21 bzw. 61 mit dieser Adressinformation geladen. Nunmehr erzeugen die Impulsgeneratoren 25 bzw. 65 eine Sequenz von acht Taktimpulsen, welche die ersten Adresszähler achtmal inkrementieren. Dadurch werden hintereinander acht aufeinanderfolgende Bytes in den Schlüsselspeichern adressiert, wobei nach jedem Schritt das betreffende Byte in den Chiffriergenerator bzw. Dechiffriergenerator eingelesen wird. Nach acht Schritten ergibt dies also eine Gesamtschlüssellänge von 8 Byte entsprechend 64 bit.

Mit dem so eingestellten Grundschlüssel (und Zusatzschlüssel) wird nun entsprechend der Ausführung nach Fig. 5 solange chiffriert, bis die Datenzähler 22 bzw. 62 das Erreichen der vorgegebenen Maximaldatenmenge $N_{max}$ signalisieren. Dann werden zunächst die zweiten Adresszähler 24 bzw. 64 inkrementiert und dann durch achtfaches Inkrementieren der ersten Zähler und jeweils anschliessendes Auslesen der Speicher die 64 bit des nächstfolgenden Grundschlüssels eingestellt, usf. Im übrigen arbeitet dieses Ausführungsbeispiel analog wie das gemäss Fig. 5.

Wie beim Ausführungsbeispiel gemäss Fig. 5 gilt auch hier, dass die diversen Zähler, Impulsgeneratoren usw. vorzugsweise durch ein Mikrocomputersystem realisiert sind.

Wie aus der generellen Funktionsbeschreibung im Zusammenhang mit Fig. 1 hervorgeht, wird die Adresse des Grundschlüssels klar übertragen. Bei den Ausführungsbeispielen nach den Fig. 5 und 6 ist dies natürlich jeweils nur die Startadresse, von der bei jeder Neuinitialisierung ausgegangen wird. Um zu verhindern, dass ein Unbefugter aus der klaren Startadresse und der Überlappung der Schlüssel Nutzen zieht (wenn z.B. schon gewisse Schlüssel oder Teile davon bekannt sind), sind den zweiten Adresszählern 24 bzw. 64 die schon genannten Transcoder 26 bzw. 66 vorgeschaltet. Diese transformieren die vom Zufallsgenerator 3 gebildete Startadresse nach irgendeiner Gesetzmässigkeit und verschleiern damit das Überlappungsgesetz.

**Patentansprüche**

1. Chiffrier/Dechiffriersystem mit einem Chiffrierteil (E) mit Mitteln (1) zum Umwandeln von Klardaten (CD) in ein Chiffrat (CT) und einem Dechiffrierteil (D) mit Mitteln (5) zum Rückumwandeln des Chiffrats (CT) in Klardaten (CD), wobei der Chiffrierteil (E) einen Chiffriergenerator (11), dessen Anfangszustand und/oder Struktur wenigstens durch einen ersten geheimen Schlüssel (PK) bestimmt wird, sowie einen ersten Speicher (2) mit einer Anzahl verschiedener erster Schlüssel (PK) enthält, und wobei der Dechiffrierteil (D) einen gleich wie der Chiffriergenerator (11) aufgebauten Dechiffriergenerator (51) sowie einen zweiten Speicher (6) mit denselben ersten Schlüsseln (PK) wie im ersten Speicher (2) enthält, und wobei Chiffrier- und Dechiffrierteil ferner Schlüssellademittel (12, 4, 7, 52) enthalten, um bei einer Neuinitialisierung des Systems einen ersten Schlüssel (PK) aus dem ersten Speicher (2) auszuwählen, in den Chiffriergenerator (11) zu laden, die Speicher-Adresse (KA) des ausgewählten ersten Schlüssels (PK) zum Dechiffrierteil (D) zu übertragen und dort aufgrund der übertragenen Speicheradresse (KA) denselben ersten Schlüssel (PK) aus dem zweiten Speicher (6) auszulesen und in den Dechiffriergenerator (51) zu laden, dadurch gekennzeichnet, dass die Schlüssellademittel (12, 4; 7, 52) durch eine im Chiffrierteil (E) befindliche Zufallsstufe gesteuert sind, welche bei jeder Neuinitialisierung des Systems eine zufällige Auswahladresse (KA) für die im ersten und zweiten Speicher (2, 6) enthaltenen und bei der Neuinitialisierung neu zu ladenden ersten Schlüssel (PK) bildet.

2. System nach Anspruch 1, wobei Chiffrier- und Dechiffriergenerator (11, 51) je durch die genannten ersten und durch zweite, zufällige Schlüssel (AK) determiniert sind, wobei der Chiffrierteil (E) einen Zufallsgenerator (3) zur Erzeugung dieser zweiten Schlüssel (AK) enthält und wobei ferner die genannten Schlüssellademittel (12, 4, 7, 52) in Chiffrier- und Dechiffrierteil dazu ausgebildet sind, bei jeder Neuinitialisierung des Systems den zweiten Schlüssel (AK) in den Chiffriergenerator (11) zu laden, zum Dechiffrierteil (D) zu übertragen und dort in den Dechiffriergenerator (51) zu laden, dadurch gekennzeichnet, dass die genannte Zufallsstufe durch den Zufallsgenerator (3) gebildet ist.

3. Vorrichtung nach Anspruch 1 oder 2, dadurch gekennzeichnet, dass im Chiffrier- und Dechiffrierteil jeweils Inkrementiermittel (21, 22, 23; 61, 62) vorhanden sind, welche nach Übertragung von je einer vorgegebenen Datenmenge ($N_{max}$) automatisch im Chiffrier- und Dechiffrierteil das systematische Auslesen und Laden jeweils eines neuen ersten Schlüssels (PK) aus dem ersten bzw. zweiten Speicher (2, 6) in den Chiffrier- bzw. Dechiffriergenerator (11, 51) ohne Übertragung der betreffenden Speicheradresse (KA) bewirken und welche ferner nach dem Auslesen wenigstens eines Teils der gespeicherten ersten Schlüssel (PK) eine Neuinitialisierung des Systems veranlassen.

4. System nach einem der Ansprüche 1 bis 3, dadurch gekennzeichnet, dass Chiffrier- und Dechiffrierteil Mittel (91 bis 96) enthalten, welche auf Übertragungsaufnahme und/oder Übertragungsstörungen und/oder Richtungswechsel der Übertragung und/oder Verarbeitung einer vorgegebenen maximalen Datenmenge ansprechen und bei bzw. nach diesen Ereignissen eine Neuinitialisierung des Systems bewirken.

5. Vorrichtung nach einem der Ansprüche 1 bis 4, dadurch gekennzeichnet, dass der Chiffrierteil (E) eine Transformationsstufe (26) zum Kodieren der von der Zufallsstufe (3) erzeugten Speicheradressen (KA) der ersten Schlüssel (PK) und der Dechiffrierteil (D) eine entsprechende Rücktransformationsstufe (66) zur Dekodierung der Speicheradressen (KA) aufweist.

## Claims

1. Cipher/decipher system with an encoding section (E) with means (1) to convert unscrambled data (CD) into a cipher and a decoding section (D) for reconverting the cipher (CT) into unscrambled data (CD), wherein the encoding section (E) comprises an enciphering generator (11), the initial state and/or structure whereof is determined by a first secret key (PK), and a first memory (2) with a plurality of different first keys (PK), and wherein the decoding section (D) comprises a deciphering generator (51) with a configuration identical to that of the enciphering generator (11), together with a second memory (6) with the same first keys (PK) as the first memory (2), and wherein the encoding and decoding sections further contain key loading means (12, 4, 7, 52), to select, upon reinitialization of the system, a first key (PK) from the first memory (2), load it into the enciphering generator (11), transmit the memory address (KA) of the selected first key (PK) to the decoding section (D) and read therein the same first key (PK) from the second memory (6) and load it into the deciphering generator (51), characterized in that the key loading means (12, 4, 7, 52) are controlled by a random stage located in the enciphering section (e), said random stage forming in the course of each reinitialization of the system a random selection address (KA) for the first key (PK) contained in the first and second memory (2, 6) and to be loaded during the reinitialization.

2. System according to claim 1, wherein the enciphering and deciphering generators (11, 51) each are determined by the said first and by second random keys (AK), with the encoding section (E) containing a random number generator (3) for the production of said second key (AK) and wherein further said loading means (12, 4, 7, 52) in the encoding and decoding sections are configured so that in the course of each reinitialization of the system the second key (AK) is loaded into the enciphering generator (11), transmitted to the deciphering section (D), and there loaded into the decephering generator, characterized in that said random stage is formed by a random number generator (3).

3. Apparatus according to claim 1 or 2, characterized in that incrementing means (21, 22, 23, 61, 62) are present in both the encoding and the decoding sections, said means automatically effecting, following the transmittal of a given amount of data ($N_{max}$) in the encoding and decoding sections, the systematic selection and loading of a new first key (PK) from the first and the second memory (2, 6) respectively, into the enciphering and deciphering generator (11, 51) without transmitting the memory address (KA) concerned and which further actuate a reinitialization of the system following the selection of at least a part of the stored first key (PK).

4. System according to one of claims 1 to 3, characterized in that the encoding and the decoding sections contain means (91 to 96) responding to the initiation of and/or interference with and/or change in the direction of transmission and/or the processing of a predetermined maximum amount of data and effecting in the course of or after these events a reinitialization of the system.

5. Apparatus according to one of claims 1 to 4, characterized in that the encoding section (E) comprises a transformation stage (26) for the coding of the memory addresses (KA) produced by the random stage (3) of the first key (PK) and the decoding section (D) a corresponding retransformation stage (66) for the decoding of said memory addresses (KA).

## Revendications

1. Système de chiffrage/déchiffrage comportant une partie de chiffrage (E) pourvue de moyens (1) pour convertir des données en clair (CD) en un chiffrat (CT) ainsi qu'une partie de déchiffrage (D) comportant des moyens (5) pour reconvertir le chiffrat (CT) en données en clair (CD), la partie du chiffrage (E) comportant un générateur de chiffrage (11), dont l'état de départ et/ou la structure sont déterminés au moins par un premier code secret (PK), et une première mémoire (2) comportant un certain nombre de premiers codes différents (PK) et la partie de déchiffrage (D) comportant un générateur de déchiffrage (51) d'une structure identique à celle du générateur de chiffrage (11) ainsi qu'une seconde mémoire (6) contenant les mêmes premiers codes (PK) que la première mémoire (2), et les parties de chiffrage et de déchiffrage comprenant en outre des moyens de chargement de code (12, 4, 7, 52), pour sélectionner, lors d'une nouvelle initialisation du système, un premier code (PK) dans la première mémoire (2), pour le chargeur dans le générateur de chiffrage (11), pour transmettre d'adresse de mémorisation (KA) du premier code sélectionné (PK) à la partie de déchiffrage (D) et ensuite, sur la base de l'adresse de mémorisation transmise (KA), pour extraire le même premier code (PK) de la seconde mémoire (6) et pour le charger dans le générateur de déchiffrage (51), caractérisé en ce que les moyens de chargement de codes (12, 4; 7, 52) sont commandés par un étage de hasard se trouvant dans la partie de chiffrage (E) et qui établit, pour chaque nouvelle initialisation du système, une adresse de sélection aléatoire (KA) des premiers codes (PK) contenus dans la première et la seconde mémoire (2, 6) et à charger à nouveau lors de la nouvelle initialisation.

2. Système selon la revendication 1, où des générateurs de chiffrage et de déchiffrage (11, 51) sont respectivement déterminés par les premiers codes précités et par des seconds codes aléatoires (AK), où la partie de chiffrage (E) contient un générateur de hasard (3) pour produire ce second code (AK) et où en outre les moyens précités de chargement de codes (12, 4, 7, 52) se trouvant dans la partie de chiffrage et dans la partie de déchiffrage sont agencés pour assurer, à chaque nouvelle initialisation du système, le chargement du second code (AK) dans le générateur de chiffrage (11), sa transmission dans la partie de déchiffrage (D) et son chargement dans le générateur de déchiffrage (51) caractérisé en ce que l'étage de hasard précité est constitué par le générateur de hasard (3).

3. Système selon la revendication 1 ou 2, caractérisé en ce qu'il est prévu dans la partie de chiffrage et dans la partie de déchiffrage, respectivement des moyens d'incrémentation (21, 22, 23; 61, 62) qui, après une transmission d'une quantité prédéterminée de données ($N_{max}$), assurent automatiquement dans la partie de chiffrage et dans la partie de déchiffrage, la lecture systématique et le chargement respectif d'un nouveau premier code (PK) provenant de la première ou de la seconde mémoire (2, 6) dans le générateur de chiffrage ou le générateur de déchiffrage (11, 51) sans transmission de l'adresse de mémorisation correspondante (KA), et qui autorisent en outre une nouvelle initialisation du système après la lecture d'au moins une partie du premier code mémorisé (PK).

4. Système selon l'une des revendications 1 à 3, caractérisé en ce que la partie de chiffrage et la partie de déchiffrage contiennent des moyens (91 à 96) qui réagissent à une réception de transmission et/ou des perturbations de transmission et/ou un changement de direction de transmission et/ou un traitement d'une quantité maximale prédéterminée de données et qui assurent, en même temps ou après lesdits évènements, une nouvelle initialisation du système.

5. Système selon l'une des revendications 1 à 4, caractérisé en ce que la partie de chiffrage (E) comporte un étage de transformation (26) pour coder les adresses de mémorisation (KA), produites par l'étage de hasard (3), du premier code (PK), et la partie de déchiffrage (D) comporte un étage de retransformation correspondante (66) pour le décodage des adresses de mémorisation (KA).

Fig. 1

Chiffrierteil E

Dechiffrierteil D

Initialisierung

| SS | KA | AK | | CT |
|----|----|----|---|----|

Synchronisier Sequenz | Schlüssel-adresse | Zusatzschlüssel (Zufallszahl) | Daten, chiffriert

*Fig. 2*

96 Neue Übertragung

95 Störung

94 Richtungswechsel

93 Störung

92 Datenmenge-$N_{max}$

91

9 Initialisierung

*Fig. 3*

| PK AK | Grundschlüsselnummer (-adresse) PK · (KA) | | | | | | | | |
|---|---|---|---|---|---|---|---|---|---|
| 1 | 3 | 4 | 5 | 6 | 7 | 0 | 1 | 2 | störungsfreier Betrieb |
| 2 | 7 | 0 | 1 | 2 | 3 | 4 | 5 | 6 | |
| 3 | 4 | 5 | ⊗ | | | | | | |
| 4 | 1 | 2 | 3 | 4 | 5 | 6 | 7 | 0 | störungsfrei |
| 5 | 2 | 3 | 4 | 5 | ⊗ | | | | |
| 6 | 6 | 7 | 0 | 1 | 2 | 3 | 4 | 5 | störungsfrei |
| 7 | 5 | 6 | 7 | 0 | . . . . . . | | | | |

*Fig. 4*

*Fig. 7*

**Chiffrierteil E**

clock

Initial.
9 ○— reset → [ N max. ] ⌐22

12-Ladekontr. ← ⦁ — Inkr. → [ Adresszähler KA ] ⌐21

Initial.
9 ○— reset → [ NK ] ⌐23

[ Zufalls- generator ] ⌐3

44 9
load Initial.

[ Speicher PK ] ⌐2

PK
[ Chiffriereinheit ] 1, 12

Initial.
9 ○ 91

**Chiffrierteil E**

---

**Dechiffrierteil D**

52-Ladekontr. ←

62 ⌐ [ N max. ] reset

clock

preset

[ Adresszähler KA ] ⌐61

[ Speicher PK ] ⌐6

[ Verteilerstufe ] ⌐7

PK
[ Dechiffriereinheit ] 52, 5

**Dechiffrierteil D**

**Fig. 5**

0 032 107

Fig. 6

Chiffrierteil E

Dechiffrierteil D

0 032 107